# EUROPÄISCHE PATENTSCHRIFT

(11) **EP 0 922 251 B1**
(45) Veröffentlichungstag und Bekanntmachung des Hinweises auf die Patenterteilung: **24.05.2000**
(21) Anmeldenummer: 97936594.7
(22) Anmeldetag: 06.08.1997
(51) Int. Cl.: G06F 11/10

(54) **SPEICHERSYSTEM**
STORAGE SYSTEM
SYSTEME DE MEMOIRE

(30) Priorität: 30.08.1996 DE 19635237
(43) Veröffentlichungstag der Anmeldung: 16.06.1999
(73) Patentinhaber: SIEMENS AKTIENGESELLSCHAFT, 80333 München (DE)
(72) Erfinder: KNEFEL, Hans-Werner, D-82152 Martinsried (DE)
(86) Internationale Anmeldenummer: DE9701644
(87) Internationale Veröffentlichungsnummer: WO9809216

(56) Entgegenhaltungen:
- EP-A- 0 353 660
- WO-A-94/18622
- DE-A- 3 528 902
- "METHOD OF ADDRESS FAULT DETECTION IN EMBEDDED MEMORY" IBM TECHNICAL DISCLOSURE BULLETIN, Bd. 34, Nr. 3, 1.August 1991, Seiten 139-140, XP000210476

## Beschreibung

Es gibt Speichersysteme, deren Dateninhalte über einen EDC-Code solchermaßen gesichert sind, daß unter der Adresse des Datenwortes zusätzlich eine Anzahl redundanter Bits mit abgespeichert wird. Diese Bits werden Kontrollwort-Bits oder kurz K-Bits genannt und entstehen durch Bildung der Paritätssumme über bestimmte Teile des Datenwortes, was üblicherweise als EDC-Codierung ("EDC" abgekürzt für Error Detection Code) bezeichnet wird. Beim Auslesen des Speicherwortes werden die Teilparitäten erneut gebildet und mit den ebenfalls ausgelesenen zugeordneten K-Bits verglichen. Falls für alle K-Bits Gleichheit besteht, schließt man daraus, daß das ausgelesene Datenwort fehlerfrei ist. Bei Ungleichheit wird aus dem Muster der Nichtübereinstimmung, dem sog. Syndrommuster, auf die Art des Fehlers geschlossen.

Diejenigen K-Bit-Positionen, die bei dem genannten Vergleich nicht übereinstimmen, heißen Syndrome. Bestimmte Syndrommuster werden decodiert und es wird so ggf. die verfälschte Bitposition im Datenwort ermittelt und durch Invertieren korrigiert.

Die Bildung der K-Bits (EDC-Codierung), der Vergleich, die Decodierung der Syndrome, sowie die Korrektur und ggf. Alarmierung einer übergeordneten Steuerung erfolgt heute normalerweise mit Hilfe spezieller Controller-Bausteine, die im folgenden auch als EDC-Controller bezeichnet werden.

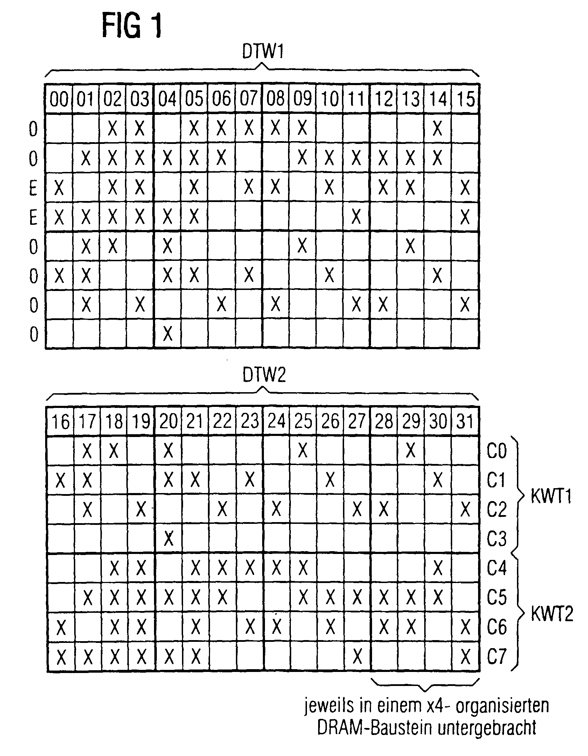

In FIG 1 ist anhand einer sog. EDC-Code-Tabelle dargestellt, über welche Bitpositionen eines Datenwortes die K-Bits in einem EDC-Controller gebildet werden.

In FIG 1 bedeutet das Zeichen "X", daß das zugeordnete Daten-bit N (00 = < N = < 31) in die Paritätsbildung für das Check-bit C (C0 = < C = < C7) einbezogen ist. Das Zeichen "0" neben den Zeilen der unteren Speicherworthälfte bedeutet, daß das zugehörige C-Bit dann gleich 1 ist, wenn die Zahl der in die Paritätsbildung einbezogenen "len" im gesamten Nutzbit-Teil ungerade ist. Das Zeichen "E" neben den Zeilen der unteren Speicherworthälfte bedeutet, daß das zugehörige C-Bit gleich 0 ist, wenn die Zahl der in die Paritätsbildung einbezogenen "len" im gesamten Nutzbit-Teil ungerade ist. Die beiden letztgenannten Aussagen beziehen sich also auf beide Hälften des Speicherwortes zusammen.

In FIG 1 sind Datenwörter vorausgesetzt,,die 32 Datenbits umfassen. Zu diesen Datenbits werden acht Kontrollbits C0, C1, C2....C7 zugeordnet, die jeweils durch Paritätsbildung über bestimmte Bitpositionen eines Datenwortes gebildet werden. Das gesamte Speicherwort, d.h. das Nutzwort (Adresse oder Daten) plus Kontrollwort, umfaßt also 40 Bits. Diese sind in DRAM-Speicherbausteinen mit einer Zellenbreite von vier Bit organisiert.

Aufgrund der gemäß den EDC-Codetabellen gebildeten Controllbits können Ein-Bit-Fehler sicher erkannt werden und führen zu ungeradzahligen Syndrommustern. Des weiteren kann eine Korrektur von Einbitfehlern durchgeführt werden, da jeder Fehler-Bitposition innerhalb eines Nutzwortes ein eindeutiges Syndrommuster fest zugeordnet ist. Dieses Syndrommuster kann decodiert und damit zur Korrektur des fehlerhaften Bits herangezogen werden.

Schließlich können Mehrbitfehler erkannt werden. Doppelbitfehler führen beispielsweise immer zu einem geradzahligen Syndrommuster ungleich 0 und werden daher sicher als Mehrbitfehler erkannt. Die weiteren geradzahligen Mehrbitfehler führen ebenfalls immer zu geradzahligen Syndrommustern, wobei mit einer Wahrscheinlichkeit von 1/128 das Nullsyndrom entsteht, da es bei dieser ECC-Breite (Zahl der K-Bits) insgesamt 128 geradzahlige Syndrommuster gibt. Diese Fehler führen daher mit einer Wahrscheinlichkeit von 99.2% sofort zu Mehrbitfehler-Alarm.

Ungeradzahlige Mehrbitfehler führen zu ungeradzahligen Syndrommustern, wobei auch die Syndrommuster von 1 Bit-Fehlern entstehen können. Daher werden diese Fehler mit 68.75% Wahrscheinlichkeit sofort als Mehrbitfehler erkannt. Diese Zahl ist folgendermaßen entstanden:
Es gibt bei 8 Bit ECC-Breite insgesamt 128 ungeradzahlige Syndrommuster. Von diesen 128 Mustern sind 40 für 1 Bit-Fehler reserviert. Es bleiben also 128-40 = 88 Muster für ungeradzahlige Mehrbitfehler übrig. Die Wahrscheinlichkeit, daß eines dieser Muster bei einem beliebigen ungeradzahligen Mehrbitfehler getroffen wird, ist somit 88/128 = 68.75%.

Zusammengefaßt ergibt sich, daß beliebige Mehrbitfehler mit einer Wahrscheinlichkeit von 215/256 = 84% sofort als Mehrbitfehler alarmiert werden. Hierbei sind auch die geradzahligen Mehrbitfehler berücksichtigt worden, die ja in 1 von 128 Fällen das Nullsyndrom verursachen. Diese Zahl ergibt sich wiederum folgenmaßen:
Es gibt bei 8 Bit ECC-Breite insgesamt 256 Syndrommuster. Von diesen 256 Mustern sind 40 für 1 Bit-Fehler reserviert und ein Muster ist das Nullsyndrommuster. Es bleiben also 256 40-1 = 215 Muster für Mehrbitfehler übrig. Die Wahrscheinlichkeit, daß eines dieser Muster bei einem beliebigen Mehrbitfehler getroffen wird, ist somit 215/256 = 84%.

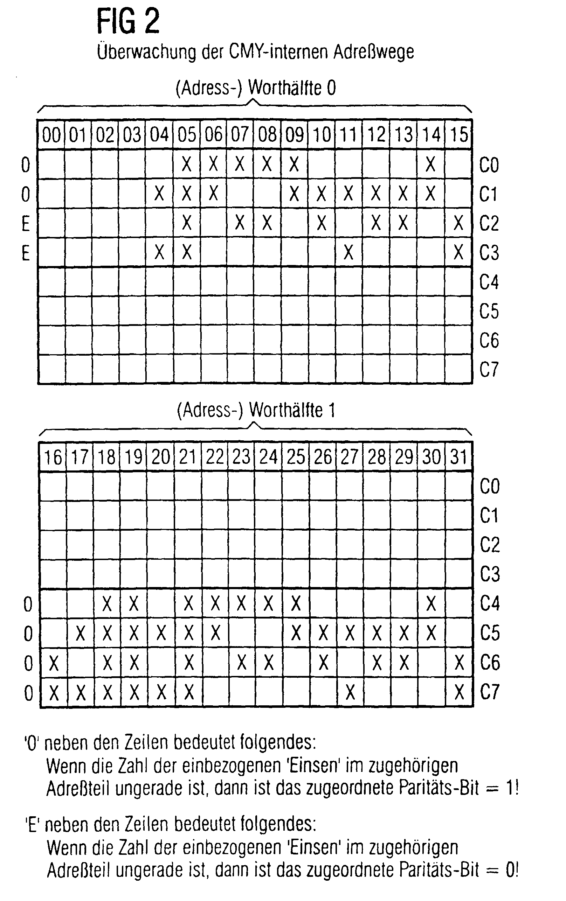

In FIG 2 ist anhand einer sog. EDC-Code-Tabelle dargestellt, über welche Bitpositionen eines Adresswortes die K-Bits in einem EDC-Controller gebildet werden. Für die Erläuterung der Darstellung in FIG 2 gilt das gleiche wie in FIG 1.

Wenn ein Fehler in der Ansteuerung der im Rahmen eines Speicherzugriffs gemeinsam, d.h. parallel angesteuerten Speichereinheiten (z.B. Speicherbausteine) des Speichersystems vorliegt, können also Syndrommuster entstehen, die einen korrigierbaren Einbitfehler vortäuschen und somit nicht als Fehler der Ansteuerung erkannt werden. Auch sind andere Fehler denkbar, z.B. Ausfall des Schreibimpulses, die über die EDC-Controller gar nicht erkennbar wären.

Das genannte Problem kann erheblich verringert werden, wenn die Speichereinheiten (z.B.Speicherbausteine), die beim Lesen gemeinsam aktiviert werden, von mehreren Ansteuersignalen der gleichen Art, die von eigenständigen Steuerungseinheiten stammen, versorgt wird. Man rechnet in diesem Fall nur mit einem Ausfall eines dieser Signale, wodurch z.B. Daten und Controllbits verschiedener Speicherworte beim Auslesen miteinander vermischt werden können. Trotz dieser Maßnahme, die im folgenden abkürzend als Maßnahme A) bezeichnet wird, können allerdings noch immer, wenn auch mit geringer Wahrscheinlichkeit, Ein-Bit-Fehler oder sogar Fehlerfreiheit vorgetäuscht werden.

Das letztgenannte Problem kann jedoch durch geschickte Aufteilung der Daten und Kontrollbits auf die Speichereinheiten in Verbindung mit der zugehörigen Wahl des EDC-Codes (siehe FIG 1) verhindert werden. Aus Fig.1 erkennt man, daß ein Abschnitt des Kontrollworts, der nicht zusammen mit demjenigen Abschnitt des Datenworts abgespeichert wird, in dem eine Ein-Bit-Verfälschung vorliegt (z.B. der Datenwort-Abschnitt DWT1 mit dem Kontrollwort-Abschnitt KWT1) , jeweils nur eine gerade Anzahl zum Syndrommuster beitragen kann. Andererseits kann ein Abschnitts des Datenworts, der zusammmen mit dem Abschnitt des Kontrollworts abgespeichert wird (z.B der Abschnitt DWT1 mit KWT2 ), nur eine ungerade Anzahl zum Syndrommuster beitragen. Der letztere Fall kann aber nicht bei Fehlern stattfinden, die durch die falsche Ansteuerung (Adressierung) einer Speichereinheit entstehen. Somit können bei einer falschen Ansteuerung also nur geradzahlige Syndrommuster entstehen.

Die geschickte Aufteilung der Daten und Kontrollbits auf die Speichereinheiten in Verbindung mit der zugehörigen Wahl des EDC-Codes wird im folgenden abkürzend als Maßnahme B) bezeichnet.

Das allgemeine Bildungsgesetz für die genannte Aufteilung bei mehr als zwei Speichermediumseinheiten ist in der Deutschen Patentanmeldung P 35 28 902.3-31 (SAG-intern GR 84 P 1995) genauer erläutert.

Abgesehen von den genannten Fehlern können auch innerhalb des Speichersystems beim Transfer der Speicherwörter zwischen Speicher und Speichersteuerung Mehrbitfehler auftreten, die von den EDC-Controllern im Speicher bzw. in der Speichersteuerung fälschlicherweise als Einbit-Fehler erkannt werden.

Das Dokument WO-A-94 18 622 beschreibt ein Fehlertolerantes Speichersystem das eine Daten Korrekturfunktion sowie eine Adressen Korrekturfunktion aufweist.

Der Erfindung, wie in Anspruch 1 angegeben, liegt die Aufgabe zugrunde, die Erkennbarkeit der letztgenannten Mehrbitfehlern zu verbessern.

Durch die erfindungsgemäße teilweise Auskreuzung der gedoppelten Leitungswege zwischen Speicher (CMYM) und Speichersteuerung (CMYC) wird die Erkennbarkeit von Mehrbitfehlern erheblich verbessert.

Eine Ausführungsform der Erfindung ist durch Anspruch 2 angegeben. Diese Ausführungsform hat den Vorteil, daß die Erkennbarkeit von Mehrbitfehlern noch wesentlich verbessert wird.

Eine Ausführungsform der Erfindung ist durch Anspruch 3 angegeben. Diese Ausführungsform hat bei ihrer Kombination mit Anspruch 2 die Wirkung, daß die Erkennbarkeit von Mehrbitfehlern mit nahezu hundertprozentiger Sicherheit gewährleistet wird.

Es folgt ein Ausführungsbeispiel der Erfindung

Fig 1 zeigt wie bereits erläutert einen EDC-Code, der zur Realisierung der Maßnahme B) für ein Speichersystem mit zwei Speichereinheiten entsprechend gewählt ist.

Zusätzlich ist der in Fig 1 dargestellte EDC-Code derart gewählt, daß ein Datenwortabschnitt, d.h. ein Abschnitt des Datenworts, der nicht zusammmen mit einem anderen Abschnitt des Datenworts abgespeichert wird (z.B. die Abschnitte DWT1 bzw. DWT2 in Fig 1), an der Bildung eines K-Bits mit jeweils einer geraden Anzahl von Bitstellen beteiligt ist, soweit es sich um einen Datenwortabschnitt handelt, der nicht zusammen mit diesem K-Bit abgespeichert wird, und mit einer ungeraden Anzahl von Bitstellen beteiligt, soweit es sich um einen Datenwortabschnitt handelt, der zusammen mit diesem K-Bit abgespeichert wird.

Durch die genannte Wahl des EDC-Codes, die im folgenden abkürzend als Maßnahme C) bezeichnet wird, werden also die Fehler alles 0' oder 'alles 1' in einer Speicherworthälfte (= Hälfte der Daten + zugehörige Hälfte von ECC-Bits) immer zu geradzahligen Syndrommustern führen. Hierdurch werden diese Fehler als Mehrfachfehler alarmiert. Da die beiden Speichereinheiten der Worthälften durch getrennte Steuerungen angesteuert werden und viele Steuerungsfehler die oben beschriebene Wirkung (alles 0 oder alles 1) haben, wird hierdurch die Unterscheidung dieser Fehler von lBit-Fehlern erheblich verbessert.

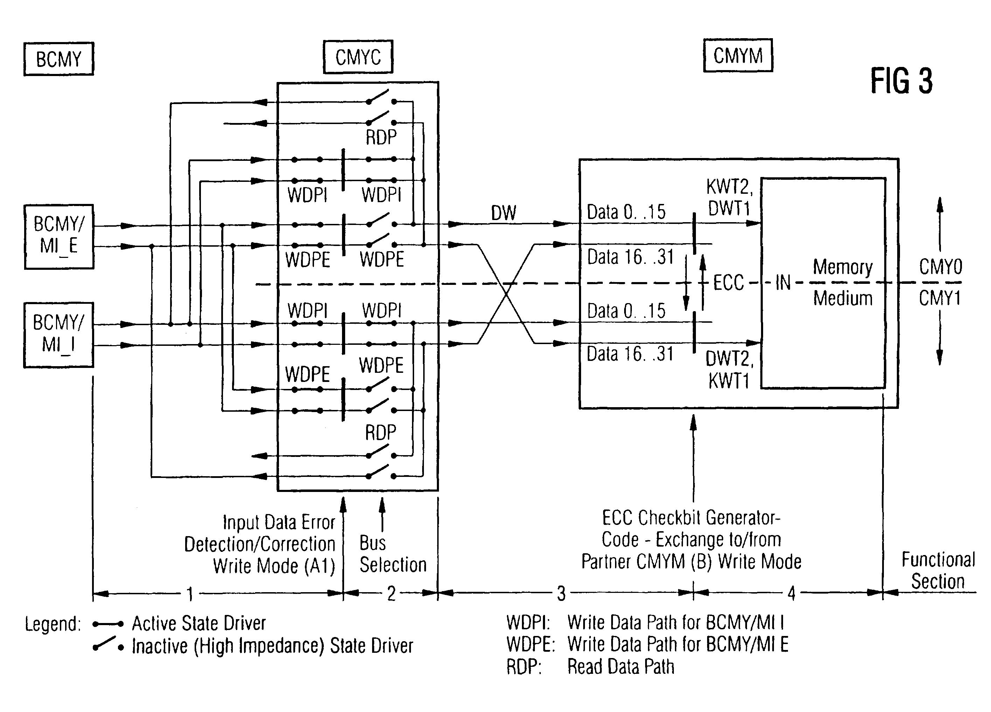

Fig 3 zeigt ein erfindungsgemäßes Speichersystem CMY, das ein gedoppeltes (Speicher-)Steuerungssystem CMYC, ein (Speicher-) Mediumsystem CMYM (kurz "Speicher") mit zwei Speichereinheiten, d.h. zwei (Speicher-)Mediumhälften, sowie eine gedoppelte Busschnittstelle BCMY, über die die Verbindung mit dem Bussystem eines Rechnersystems hergestellt wird.

Das Speichersystem umfaßt eine Fehlerüberwachung, die mit Hilfe von EDC-Kontrollern in Abhängigkeit des Maschinenzyklusses (Lese- oder Schreibzyklus) unterschiedliche Kontrollpunkte bereitstellt.

Alle Datenwege im CMY, dh. zwischen BCMY und CMYM, sind gedoppelt vorhanden und in jedem Datenweg wird an den Kontrollpunkten von entsprechenden EDC-Kontrollern zur Fehlerüberwachung unabhängig voneinander die volle Breite der Datenworte(32 Bit) herangezogen.

In Fig 3 ist insbesondere die Konfiguration der Datenwege und Kontrollpunkte des Speichersystems für einen Schreibzyklus dargestellt.

Beim Schreibzyklus gelangen die Schreibdaten und zugehörigen K-Bits vom BCMY kommend zunächst über Schreibpfade WDPI zu einem Kontrollpunkt A1. An diesem Kontrollpunkt wird die bereits genannte Fehlerüberwachung durchgeführt, bei der Bitfehler (Ein- oder Mehrbitfehler) erkannt werden und Einbitfehler sogar korrigiert werden.

Anschließend werden die Schreibdaten gedoppelt (jedoch ohne Kontrollbits) zum Speicher CMYM weitergeleitet.

Am Kontrollpunkt B, d.h. unmittelbar vor dem Einschreiben der Schreibdaten in den Speicher, wird in jeder der beiden Übertragungshälften aus den Schreibdaten nochmals ein Kontrollwort generiert und ein Vergleich ECC der beiden Kontrollwörter durchgeführt. Nur wenn die Daten bis dahin in beiden Hälften fehlerfrei verarbeitet wurden, sind die beiden Kontrollworte identisch, ansonsten kommt es zur Alarmierung eines Mehrfachfehlers, d.h. eines nicht korrigierbaren Fehlers. Durch den Vergleich ECC werden Fehler gefunden, die u.a. auf einer fehlerbehafteten Übertragung zwischen A1 und B beruhen oder durch fehlerbehaftete EDC-Netzwerke an den Kontrollpunkten A1 oder B bedingt sind.

Die Kontrollbits von Kontrollpunkt A1 werden für den Kontrollpunkt B, nicht benötigt, da sie am Kontrollpunkt B, d.h. unmittelbar vor dem Einschreiben der Schreibdaten ins Mediumsystem, aus den Schreibdaten nochmals generiert werden und weil sie zur Fehlerüberwachung zwischen A1 un B nicht benötigt werden. Die Fehlerübrwachung zwischen A1 und B ist ja bereits durch den Vergleich der beiden am Kontrollpunkt B gebildeten Kontrollworts bereits gewährleistet.

Die Übertragungsstrecke der Daten zwischen A1 und B ist teilweise ausgekreuzt. Liegt nun in einer Übertragungshälfte ein Auswahlfehler (Ansteuerungsfehler) vor, so kommt es am Kontrollpunkt B zu Inkonsistenzen. Dies führt zur Alarmierung eines Mehrfachfehlers.

Ergibt der Vergleich am Kontrollpunkt B keine Inkonsistenzen, so werden die Daten samt Kontrollwort in das Mediumsystem eingeschrieben. Insbesondere werden dabei die Datenbits 0...15 (DWT1) zusammen mit den K-Bits 4...7 (KWT2) in die eine Mediumhälfte eingeschrieben und die Datenbits 16...32 (DWT2) zusammen mit den K-Bits 0...3 (KWT1) in die andere Mediumhälfte.

Durch die erläuterte abschnittsweise Überwachung der Datenwege auf Steuerungsfehler iVm. dem Austausch der Speicherworthälften zwischen beiden Steuerungen läßt sich aus der kombinierten Betrachtung der Alarme verschiedener EDC-Bausteine der Ort herleiten, an dem der Fehler entstanden ist.

Um einen evtl fehlerhaften Schreibvorgang zu verhindern, der im Abschnitt 4, d.h. direkt beim Einschreiben erfolgt, wird anstatt eines reinen Schreibzyklusses ein Lese-/Schreibzyklus durchgeführt, wobei ein EDC-Check der Lesedaten und damit ein Check der Ansteuerung einer Speicherzelle erfolgt, bevor eine korrekt ansteuerbare Speicherzelle durch die Fehlansteuerung eines fehlerhaften Schreibvorgangs überschrieben wird. Der Lesevorgang bleibt dabei intern, d.h. die BCMY nimmt die Lesedaten nicht auf, um sie auf den Bus auszugeben. Die Schreibdaten werden bis zum Abschluß des Lesechecks in der CMYM zwischengespeichert. Aufgrund dieser Maßnahme werden die Systemauswirkungen von Steuerungsfehlern gering gehalten, sowie die (Steuerungs-)Fehler besser unterschieden und schneller erkannt.

Speziell bewirkt diese Maßnahme, kombiniert mit den genannten Maßnahmen A) und B), daß Fehler in der Auswahl einer Speicherworthälfte (z. B. bedingt durch Adressierungsfehler) schon vor dem Auslesen des verfälschten Speicherwortes als Mehrbitfehler erkannt werden. Kombiniert mit Maßnahme C) gilt dies ebenfalls für die Adressierungsfehler von ganzen Speicherworten. Der gleiche Vorteil gilt bei MehrbitVerfälschungen, die durch Fehler innerhalb eines Speicherbausteins bewirkt werden.

Aus Gründen der Klarheit wurde bisher die Anwendung der EDC-Codierung nur bezüglich des Datenworts erläutert. Tatsächlich wird jedoch nicht nur das Datenwort sondern auch die Speicheradresse des Datenworts in die EDC-Codierung, d.h. in die Paritätsbildung mit einbezogen (siehe FIG 2). Der EDC-Code ist dabei bezüglich des Adressenwortes derart gewählt, daß bei einem Ein-Bit-Fehler im Adressenwort nur ein geradzahliges Syndrom-Muster entstehen kann. Das bedeutet aber, daß einem Mehrfach-Bit-Fehler ebenfalls nur ein geradzahliges Syndrom-Muster entstehen kann. Es kommt somit bei einem Adressierungsfehler immer zur Alarmierung eines Mehrfachfehlers, d.h. eines unkorrigierbaren Fehlers. Das Einbeziehen der Adresse in die EDC-Codierung ist in der Offenlegungsschrift DE 3319710 A1 (SAG-intern 83 P 1382 DE) näher erläutert und wird im folgenden abkürzend als Maßnahme C) bezeichnet.

Um den Aufwand der für die Maßnahme C) notwendigen Generierung der Adreß-Paritätsbits zu minimieren, erfolgt eine zusätzliche Nutzung der Daten-EDC-Bausteine zur Generierung der Adreß-Paritätsbits. Dies wird möglich durch Zeitmultiplex von Adresse und Daten sowie Bildung der Adreß-Paritätsbits gemäß FIG 2, d.h. aus einer Teilmenge der EDC-Codierung von FIG 1. Hierdurch ist die für Maßnahme C) notwendige Bedingung der Geradzahligkeit pro Adreßbit eingehalten. Es wird hierfür die für Maßnahme B) notwendige Bedingung der Geradzahligkeit bestimmter Codeabschnitte genutzt.

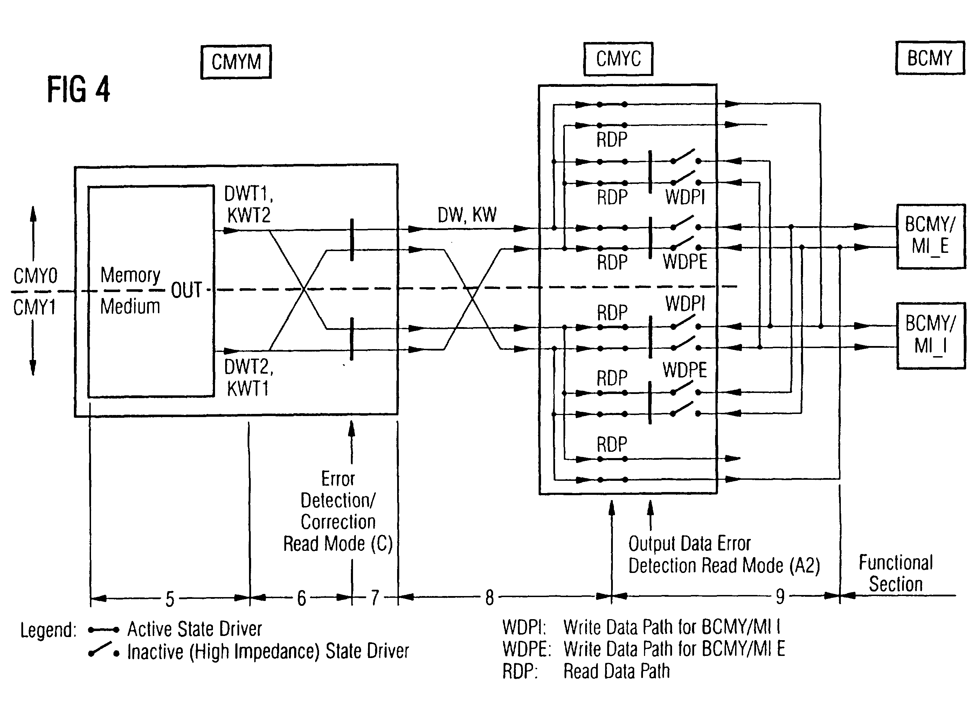

FIG 4 zeigt die Konfiguration der Datenwege und Kontrollpunkte des Speichersystems für einen Lesezyklus.

Während des Lesezyklusses wird das Datenwort und das zugehörige Kontrollwort zunächst ausgelesen und gelangt zum Kontrollpunkt C, an dem eine Fehlererkennung und gegebenenfalls Fehlerkorrektur durchgeführt wird. Anschließend wird das Datenwort und das Kontrollwort zu der Busschnittstelle BCMY weitergeleitet, wobei am Kontrollpunkt A2 nochmals eine Fehlererkennung durchgeführt wird. Diese Fehlererkennung bewirkt im Fehlerfall, daß die Busschnittstelle BCMY die Weitergabe des Datenworts und des Kontrollworts auf den Bus blockiert. Außerdem wird in diesem Fall die defekte Speichersystemhälfte (CMY0 oder CMY1) von der Busschnittstelle BCMY weggeschaltet.

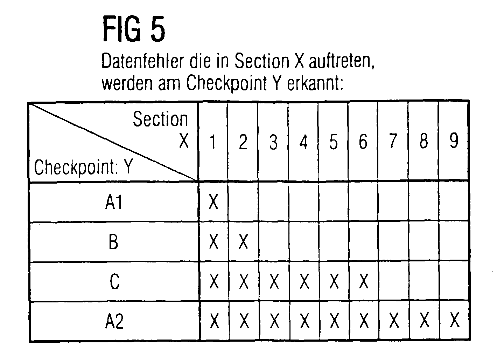

FIG 5 zeigt iVm FIG 3 und 4, an welchem Kontrollpunkt (Checkpoint Y) Datenfehler erkannt werden, die in einem bestimmten Abschnitt (Section X) des Speichersystems auftreten.

Es folgen nunmehr Beispiele für spezielle Fehler und deren Bearbeitung durch das Fehlerüberwachungssystem.

### Beispiel 1: Erkennung von Steuerungsfehlern mit der EDC-Sicherung

Fehlerfall: Falsche Auswahl einer Speicherworthälfte Mittel zur Erkennung: Maßnahme A) und B)
Zuordnung der Bitpositionen:

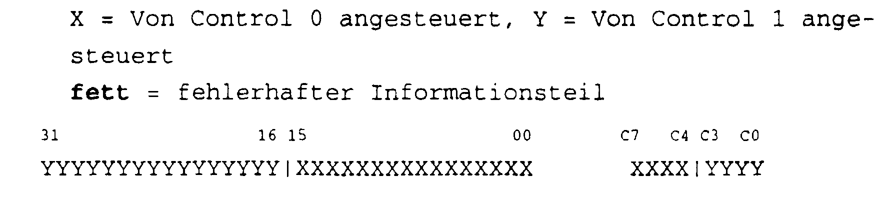

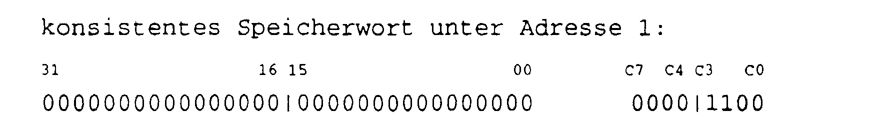

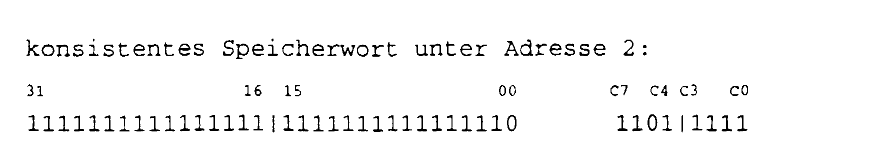

Von Control 0 wurde beim Lesen unter Adresse 2 fälschlicherweise unter Adresse 1 ausgelesen. Das führt zu folgender Leseinformation:

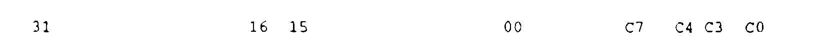

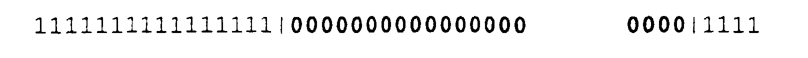

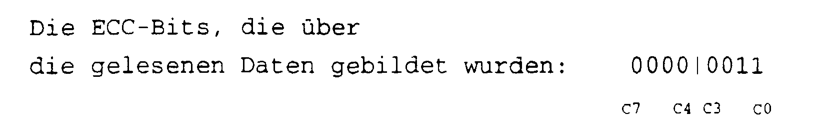

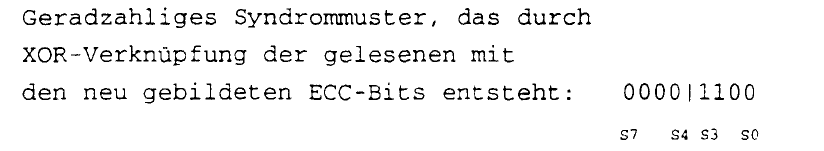

Es führt zur Alarmierung eines Mehrfachfehlers!

### Beispiel 2: Erkennung von Steuerungsfehlern mit der EDC-Sicherung

Fehlerfall: eine Speicherworthälfte bleibt hochohmig Mittel zur Erkennung: Maßnahme 1)
Zuordnung der Bitpositionen:

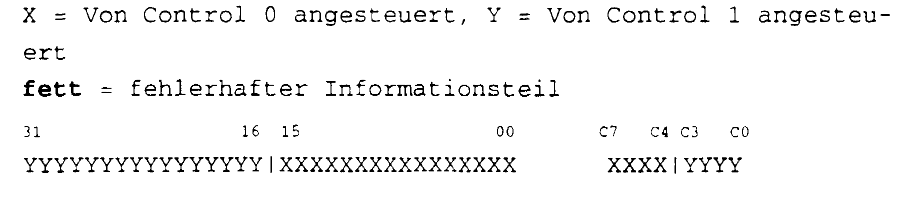

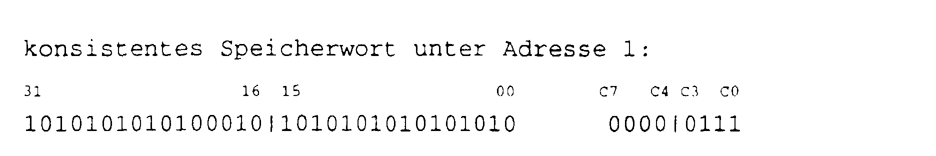

Von Control 1 wurden beim Lesen unter Adresse 1 fälschlicherweise die zugehörigen Daten- und ECC-Ausgänge nicht niederohmig geschaltet. Das führt zu folgender Leseinformation:

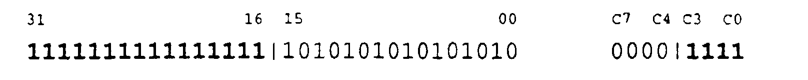

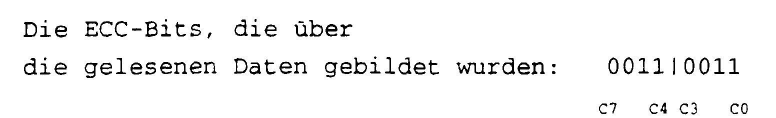

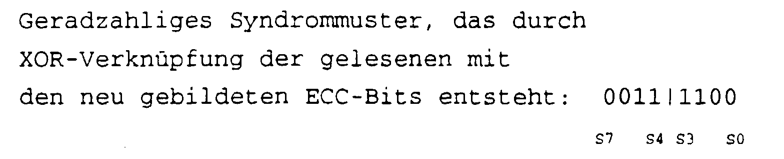

Es führt zur Alarmierung eines Mehrfachfehlers!

### Beispiel 3: Erkennung von Speicherwort-Adressierungsfehlern

- Fehlerfall:: Adressierungsfehler (Einfachfehler) auf Speicherzelle mit gleichem Dateninhalt
- Mittel zur Erkennung:: Maßnahme C), d.h. die physikalische Adresse wurde in die Bildung der ECC-Bits mit einbezogen (siehe Fig. 2)

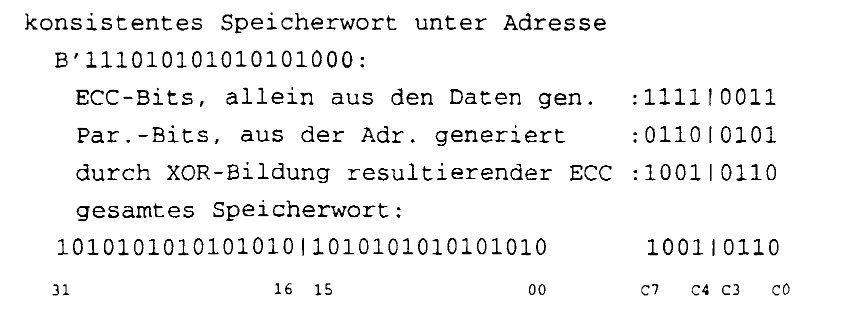

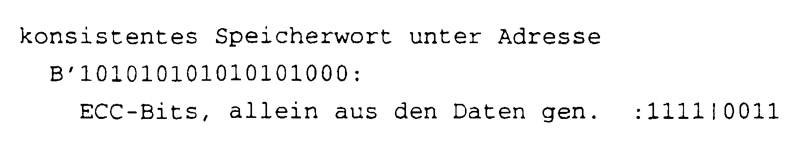

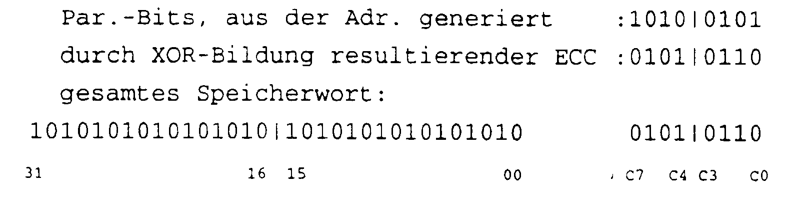

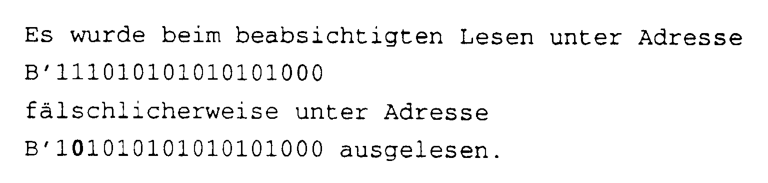

Das führt zu folgender Leseinformation:

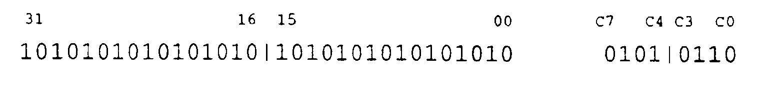

Neugenerieren der ECC-Bits:

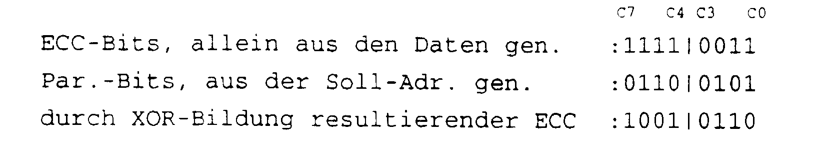

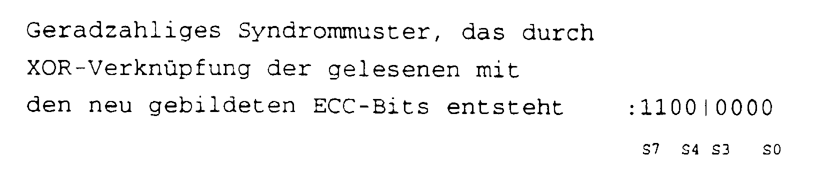

Es führt zur Alarmierung eines Mehrfachfehlers!

### Beispiel 4: Erkennung von Speicherwort-Adressierungsfehlern

- Fehlerfall:: Adressierungsfehler (Mehrfachfehler) auf Speicherzelle mit unterschiedlichem Dateninhalt
- Mittel zur Erkennung:: Maßnahme C), d.h. die physikalische Adresse wurde in die Bildung der ECC-Bits mit einbezogen (siehe Fig. 2)

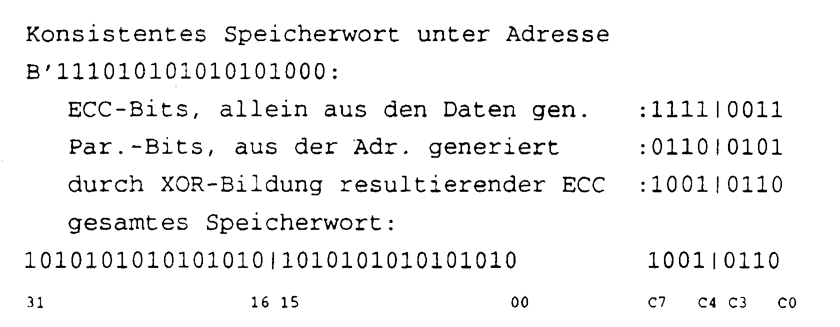

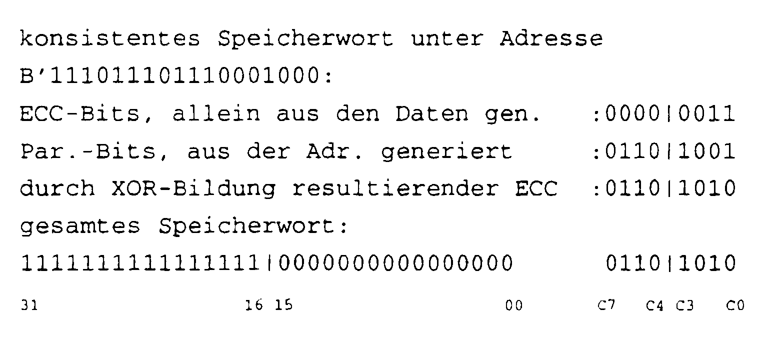

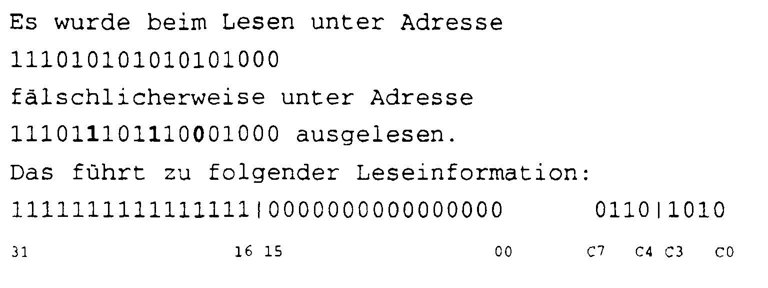

Neugenerieren der ECC-Bits:

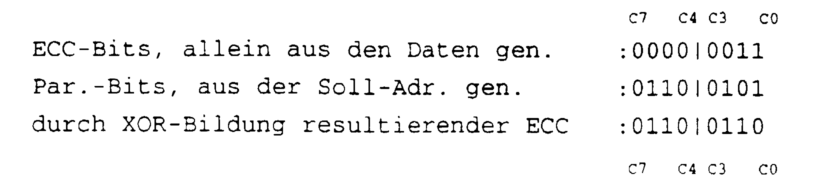

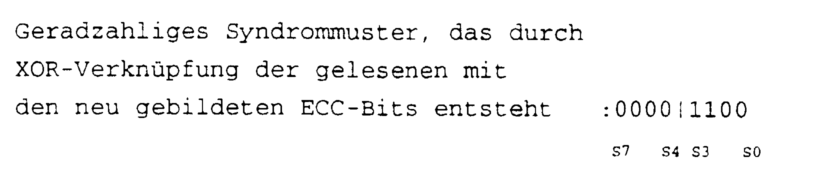

Es führt zur Alarmierung eines Mehrfachfehlers!

## Patentansprüche

1. Speichersystem, mit
a) einem Speicher (CMYM), in dem Speicherwörter abgespeichert werden, die jeweils ein Datenwort und ein Kontrollwort umfassen,
a1) wobei der Speicher zwei Speichereinheiten umfaßt und in jeder Speichereinheit jeweils ein Abschnitt des Datenworts zusammen mit einem Abschnitt des Kontrollworts abgespeichert wird,
a2) und wobei der Speicher zwei Fehlerüberwachungseinrichtungen umfaßt, die anhand des Kontrollwortes eine Fehlerüberwachung des Speicherwortes durchführen,
b) einer Speichersteuerung (CMYC) zur Ansteuerung des Speichers, die ebenfalls zwei Fehlerüberwachungseinrichtungen zur Fehlerüberwachung zwischen Speichersteuerung (CMYC) und Speicher (CMYM) umfaßt,
c) einer gedoppelten Leitungsstruktur zwischen Speichersteuerung (CMYC) und Speicher (CMYM) zum gedoppelten Transfer der Speicherwörter zwischen Speichersteuerung (CMYC) und Speicher (CMYM),
**dadurch gekennzeichnet, daß**
die gedoppelte Leitungsstruktur zwischen Speicher (CMYM) und Speichersteuerung (CMYC) teilweise ausgekreuzt ist, und zwar derart, daß einer der beiden genannten Abschnitte des Datenwortes ausgekreuzt wird.

2. Speichersystem nach Anspruch 1,
**dadurch gekennzeichnet, daß**
die genannten Fehlerüberwachungseinrichtungen die Fehlerüberwachung derart durchführen, daß sie
a) mittels einer Codiereinrichtung gemäß einem bestimmten Bildungsgesetz aus dem zu überwachenden Speicherwort ein Kontrollwort erzeugen, die Bits dieses Kontrollworts(K-Bits) mit den im Speicherwort enthaltenen K-Bits vergleichen und bei Ungleichheit aus dem Muster der gleichen und ungleichen K-Bits, dem sog. Syndrommuster, auf die Art des Fehlers schließt, wobei
b) das genannte Bildungsgesetz derart gewählt ist, daß der genannte Vergleich bei einem Ein-Bit-Fehler eine ungerade Anzahl von ungleichen K-Bits ergibt, wobei zu der ungeraden Anzahl aus denjenigen Abschnitten des Kontrollworts, die nicht zusammen mit demjenigen Abschnitt des Datenworts abgespeichert sind, in dem die Ein-Bit-Verfälschung vorliegt, jeweils eine gerade Anzahl von ungleichen K-Bits beitragen.

3. Speichersystem nach Anspruch 1 oder 2
**dadurch gekennzeichnet, daß**
die genannte abschnittsweise Aufteilung der Datenbits und K-Bits auf die beiden Speichereinheiten des Speichersystems (bei vorgegebenem EDC-Code) derart gewählt ist, daß an einem auf einen Ein-Bit-Fehler beruhenden ungeraden Syndrommuster eine gerade Anzahl von K-Bits beteiligt sind, die nicht zusammen mit demjenigen Abschnitt des Datenworts abgespeichert sind, in dem die Ein-Bit-Verfälschung vorliegt.

## Claims

1. Memory system, having
a) a memory (CMYM), in which memory words each comprising a data word and a check word are stored,
a1) the memory comprising two memory units and a respective section of the data word being stored together with a section of the check word in each memory unit,
a2) and the memory comprising two error monitoring devices which carry out error monitoring of the memory word using the check word,
b) a memory controller (CMYC) for addressing the memory, which likewise comprises two error monitoring devices for error monitoring between the memory controller (CMYC) and the memory (CMYM),
c) a double line structure between the memory controller (CMYC) and the memory (CMYM) for double transfer of the memory words between the memory controller (CMYC) and the memory (CMYM),
characterized in that
the double line structure between the memory (CMYM) and the memory controller (CMYC) is partially transposed, to be precise in such a way that one of the two abovementioned sections of the data word is transposed.

2. Memory system according to Claim 1,
characterized in that
the abovementioned error monitoring devices carry out the error monitoring in such a way that they
a) generate a check word in accordance with a specific formation law by means of an encoding device from the memory word to be monitored, compare the bits of this check word (C bits) with the C bits contained in the memory word and, in the absence of identity, draw a conclusion about the type of error from the pattern of identical and non-identical C bits, the so-called syndrome pattern,
b) the abovementioned formation law being selected in such a way that the abovementioned comparison results in an odd number of non-identical C bits in the event of a one-bit error, an even number of non-identical C bits in each case contributing to the odd number from those sections of the check word which are not stored together with that section of the data word in which the one-bit corruption is present.

3. Memory system according to Claim 1 or 2,
characterized in that
the abovementioned section-by-section division of the data bits and C bits between the two memory units of the memory system (with a predetermined EDC code) is selected in such a way that an even number of C bits which are not stored together with that section of the data word in which the one-bit corruption is present participate in an odd syndrome pattern based on a one-bit error.

## Revendications

1. Système de mémoire comportant
a) une mémoire (CMYM) dans laquelle sont mis en mémoire des mots de mémoire qui comprennent chacun un mot de données et un mot de contrôle,
a1) la mémoire comprenant deux unités de mémorisation et chaque fois une partie du mot de données étant mise en mémoire dans chaque unité de mémorisation conjointement avec une partie du mot de contrôle,
a2) et la mémoire comprenant deux dispositifs de surveillance d'erreurs qui effectuent à l'aide du mot de contrôle une surveillance d'erreurs du mot de mémoire,
b) une commande (CMYC) de mémoire pour commander la mémoire, qui comprend également deux dispositifs de surveillance d'erreurs pour la surveillance d'erreurs entre la commande (CMYC) de mémoire et la mémoire (CMYM),
c) une structure de ligne doublée entre la commande (CMYC) de mémoire et la mémoire (CMYM) pour le transfert doublé des mots de mémoire entre la commande (CMYC) de mémoire et la mémoire (CMYM),
caractérisé en ce que la structure de ligne doublée entre la mémoire (CMYM) et la commande (CMYC) est partiellement croisée, et cela de telle manière que l'une des deux parties précitées du mot de données est croisée.

2. Système de mémoire suivant la revendication 1, caractérisé en ce que les dispositifs de surveillance d'erreurs mentionnés effectuent la surveillance d'erreurs de telle manière qu'ils
a) produisent au moyen d'un dispositif de codage, suivant une loi de formation déterminée, un mot de contrôle à partir du mot de mémoire à surveiller, comparent les bits de ce mot de contrôle (bits K) aux bits K contenus dans le mot de mémoire et, en cas d'inégalité, déduisent le genre de l'erreur du modèle des bits K égaux et inégaux, de ce que l'on appelle le modèle de syndrome,
b) la loi de formation mentionnée étant choisie de telle manière que la comparaison précitée donne, pour une erreur sur un bit, un nombre impair de bits K inégaux, chaque fois un nombre pair de bits K inégaux contribuant au nombre impair obtenu à partir des parties du mot de contrôle qui ne sont pas mémorisées conjointement avec la partie du mot de données dans laquelle se trouve l'erreur sur un bit.

3. Système de mémoire suivant la revendication 1 ou 2, caractérisé en ce que la subdivision par parties mentionnée des bits de données et des bits K sur les deux unités de mémorisation du système de mémoire est (pour un code EDC prescrit) choisie de telle manière que participent à un modèle de syndrome impair reposant sur une erreur sur un bit un nombre pair de bits K qui ne sont pas mémorisés conjointement avec la partie du mot de données dans laquelle se trouve l'erreur sur un bit.
